# EUROPEAN PATENT APPLICATION

(11) **EP 2 759 392 A1**
(43) Date of publication of application: **30.07.2014**
(21) Application number: 14152010.6
(22) Date of filing: 21.01.2014
(51) Int. Cl.: B29C 65/34, B29C 65/82, G01N 29/00, F16L 47/03

(54) **An electrofusion fitting**

(30) Priority: 25.01.2013 GB 201301339
(71) Applicant: Radius Systems Limited, Alfreton, Derbyshire DE55 2JJ (GB)
(72) Inventor: Muckle, Derek, Long Whatton, Leicestershire LE12 5DN (GB)
(74) Representative: Stainthorpe, Vanessa Juliet

(57) **Abstract**

An electrofusion fitting (10) for a plastics pipeline, comprising:
a moulded plastic body (12) having an exterior surface (17) and an interior fusion surface (14); and
an electrofusion element (15) occupying an area at or near the fusion surface (14), said electrofusion element (15) being adapted to form a fused joint between said fitting (10) and
said plastic pipeline,

characterised in that:
said exterior surface (17) includes a substantially plain-profiled indicator region (18a, 18b) located above said EF element (15) area.

## Description

This invention relates to an electrofusion fitting for a plastics pipeline.

### BACKGROUND

Electrofusion fittings are known to securely join component parts of a plastics pipeline. Electrofusion fittings rely on the known principle of electrofusion welding as seen in socket components described from the early 1980s onwards (e.g. GB2137026, EP0221396). In general a resistance wire is formed into a helical coil at the surface, or a distance below the surface, of the bore of a polyethylene cylindrical socket. A polyethylene pipe whose outside diameter is slightly smaller than the bore of the socket can be inserted into the socket ready for welding - usually by mechanical cleaning to remove aspects likely to contaminate a welding process. Once assembled, a current passing through the resistance wire will cause the wire temperature to rise to a level that causes melting of the surrounding plastic socket. The high coefficient of thermal expansion of polyethylene causes the gap from the pipe to fitting to be filled and in turn the surface of the pipe to be melted. After the input of a defined amount of energy, usually found by empirical testing, the applied current is removed and this causes the fitting to cool and solidify as a homogeneous mass (pipe and socket).

The principle of electrofusion welding for saddle components is also known (e.g. EP1674780). In general, a resistance wire is formed into a helical coil at the surface or below the surface of an underside of the saddle fitting. The saddle component is positioned on a cleaned portion of the pipe. Once assembled, a current passing through the resistance wire will cause the wire temperature to rise to a level that causes melting of the plastic in the saddle component and the pipe underneath the saddle. After the input of a defined amount of energy, usually found by empirical testing, the applied current is removed and this causes the fitting to cool and solidify as a homogeneous mass (pipe and saddle fitting). Other electrofusion fittings are also known.

Assessing the quality of electrofusion joints is difficult. Current methods rely upon good design of the electrofusion fitting in the first instance by the manufacturer. Indicators are often provided on the fitting to indicate whether a good joint has been made.

A pop-up indicator makes use of a pin which is pushed out of the body of the fitting by the pressure generated by the molten polyethylene material trapped in the weld zone during the heating process. If working correctly, a pop-up indicator pin in the raised position indicates that the joint has been made. However, the pop-up indicator may not rise if there is no pipe present, or if the pipe is misaligned or badly cut (because insufficient pressure is generated in the weld to raise the pin). On the other hand, the indicator pin may rise too much if the stored energy due to a bending moment on the fitting resolves itself by displacing molten polyethylene during the welding process. It is also known that pop-up indicators may rise excessively, or be melted themselves where too much energy is applied to the weld. At present there is no design standard or consistency between manufacturers or within a single manufacturer's product portfolio for pop-up indicators. Furthermore there is not a reference library of failure modes for a given displacement of the indicator. The pop-up system is therefore useful only as an indication of an effective weld.

Field data capture systems are widely deployed within the market for electrofusion fittings and provide functionality to automate, where possible, the welding process to improve consistency or provide additional data to support condition assessment. Consistency is achieved by automated entry of the welding parameters using components such as resistor pins or by the use of barcodes and scanners (e.g. GB2137026). Such systems automatically detect the welding parameters to be used such as power input and duration, thus avoiding erroneous manual entries which could generate a sub-standard weld.

Data logging features on electrofusion welding units are capable of monitoring the energy consumed during the welding of electrofusion socket fittings and this again can be used to infer condition or quality of the weld. Typically an electrofusion fitting is powered by a fixed voltage that, when combined with resistance of the wire element, results in a level of electrical current demand. The voltage is monitored within a tolerance, as is the current drawn. If, for example, the electrofusion joint moves during welding, it is possible that one or more of the helical wire windings may touch and this can cause an electrical short (sudden change in resistance) resulting in a step change in electrical current. This is observable when retrieving data records and can be used to indicate a possible problem with the quality of a joint.

The aforementioned indicators are only used to assess the quality of the joint during its creation. Post-creation examination techniques are also known, such as non-destructive examination (NDE) techniques. Recent advances in technology have made it possible to conduct NDE of field installed fittings. The most promising of these technologies appears to be phased array ultrasound systems, or microwave frequency alternatives (see EP1017966 and EP1779123). TestPEP, a pan-European research project, is seeking to catalogue defects found using NDE. However NDE of electrofusion fittings is not straightforward and problems are found through a lack of normalization between one electrofusion fitting and another, and between the same fitting over time. Furthermore, the exact position of the electrofusion element is not apparent from the external appearance of the fitting.

In true condition assessment of a pipeline, the use of an NDE technique is not ordinarily a onetime deployment but rather is repeated over time and results compared to determine the rate of deterioration of a welded joint and its likely residual lifetime.

The present invention provides an electrofusion fitting that seeks to overcome the problems identified above, or at least to mitigate their effects.

### BRIEF SUMMARY OF THE DISCLOSURE

In accordance with the present invention there is provided an electrofusion fitting for a plastics pipeline, comprising:
a moulded plastic body having an exterior surface and an interior fusion surface; and an electrofusion element occupying an area at or near the fusion surface, said electrofusion element being adapted to form a fused joint between said fitting and said plastic pipeline, characterised in that:
   said exterior surface includes a substantially plain-profiled indicator region located above said EF element area.

Preferably the indicator region has an area equal to or larger than said EF element area. The indicator region may be large enough to cover the whole fusion zone.

In a preferred form, the indicator region is bounded on at least one side by a variation in the surface profile of the exterior surface of the fitting. The variation in the surface profile can be the indicator region being raised or lowered with respect to adjacent parts of said exterior surface, or could be a flange upstanding from said exterior surface and adjacent to said indicator region. Such a flange may, for example, have a substantially rectangular or substantially triangular profile. Preferably the indicator region is bounded on both sides by said variation in the surface profile of the exterior surface of the fitting.

The indicator region is preferably capable of guiding a non-destructive examination tool in order to inspect said EF element area. This enables the NDE tool to be easily placed on and guided around or across the correct location on the fitting when the area it is desired to inspect is not visible from the exterior surface of the fitting

The fitting preferably includes one or more fixed reference points for use in inspection of said EF element area. The reference points may be upstanding lugs or other features visible on the exterior surface of the fitting and may be located either in or out of the indicator region.

The present invention is applicable to many different types of electrofusion fitting, for example generally cylindrical fittings or saddle fittings.

To facilitate NDE, the fitting may include engaging means for engaging a non destructive examination tool. The engaging means are optionally located within the indicator region and may comprise an area of high coefficient of friction and/or a plurality of teeth

According to a second aspect of the invention, there is provided a non destructive examination tool for inspecting the EF element area of an electrofusion fitting as described above, said tool having an engaging end for engaging the fitting at said indicator region.

The tool may include referencing means adapted to use said fixed reference points to reference said tool about said fitting.

The tool may further include driving means configured to drive said tool across said indicator region and, in the case of a generally cylindrical fitting, configured to drive said tool around the circumference of said fitting. The tool may be adapted to engage with said engaging means.

Further features are defined in the appended claims.

### BRIEF INTRODUCTION OF THE DRAWINGS

Embodiments of the invention are more particularly described below, by way of example, with reference to the accompanying drawings, in which:
Figure 1 is a perspective view of a prior art fitting;
Figure 2a and 2b are perspective and cross-sectional views, respectively, of the prior art fitting of Figure 1;
Figure 3 is a cross-sectional view of an electrofusion fitting embodying the first aspect of the present invention;
Figure 4a and 4b are perspective and cross-sectional views, respectively, of an electrofusion fitting according to the present invention;
Figure 5a and 5b are perspective and cross-sectional views, respectively, of an electrofusion fitting according to the present invention;
Figure 6a and 6b are perspective and cross-sectional views, respectively, of an electrofusion fitting according to the present invention;
Figure 7 is a cross-sectional view of an electrofusion fitting according to the present invention;
Figure 8a and 8b are perspective views of an electrofusion fitting according to the present invention; and
Figure 9 is a cross sectional view of an electrofusion fitting according to the present invention.

### DETAILED DESCRIPTION

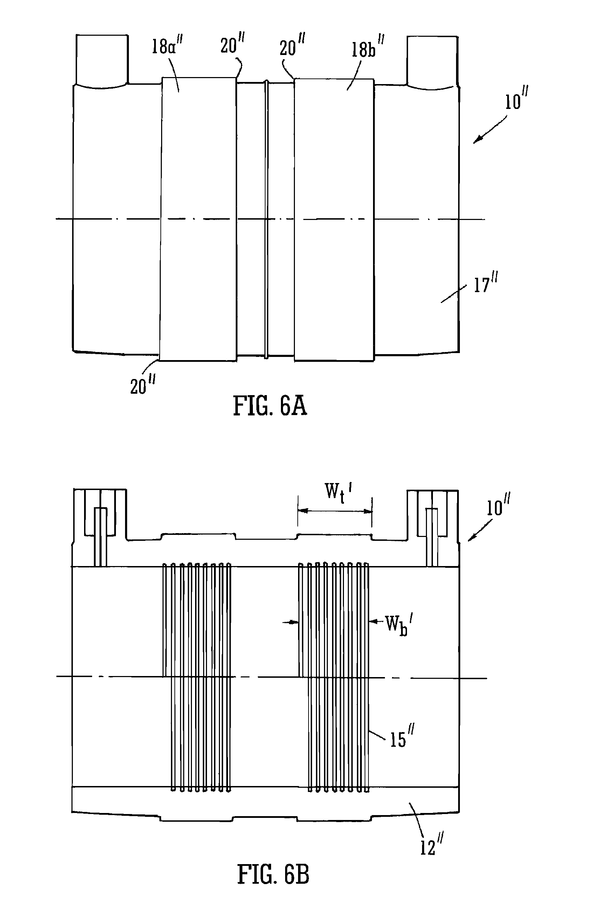

Throughout the following description, when referring to related figures (e.g. figures 6A and 6B), a shorthand reference (e.g. "figure 6") is used. Where possible, related features have the same reference numeral with an additional prime symbol (e.g. 10 and 10').

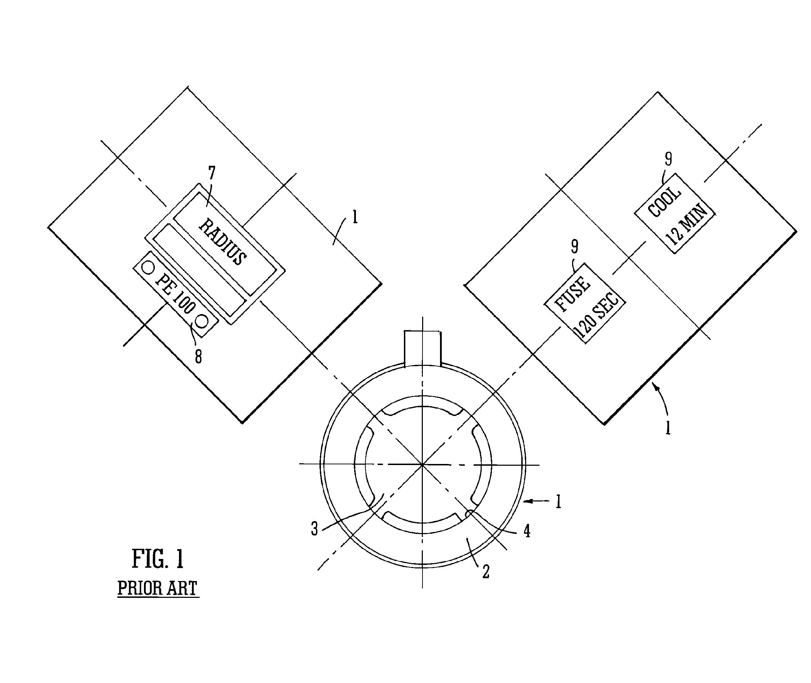

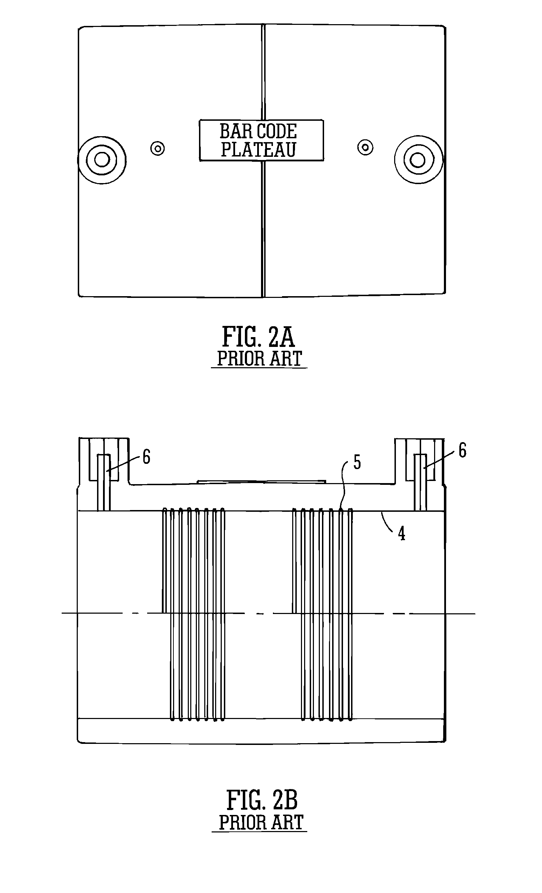

Electrofusion pipe fittings are known in the art. Figures 1 and 2 show prior art fittings for coupling two pipes, as part of a plastic pipe system. The fitting 1 shown in Figure 1 is a socket fitting. It comprises a moulded plastic body 2 having an axial bore 3 for receiving pipes. An internal fusion surface 4 of the bore can be fused with an external surface of the pipes (not shown) to form a joint therebetween. Figure 2 shows an electrofusion ("EF") element 5 comprising electrically conductive resistance wire positioned at or near the fusion surface and connected to conductive terminal pins 6. Current passed through the EF element 5 causes the surrounding plastic (both of the fitting and the proximal external surface of the pipe) to melt. Once molten, the plastic of the fitting and the pipe fuse to form a joint.

Figure 1 shows labels that are used to indicate the manufacturer's name 7, the product code 8, or to provide instructions 9 for the fusion process. These labels are generally moulded as part of the exterior profile of the fitting by way of moulded in badge details or moulded plinths.

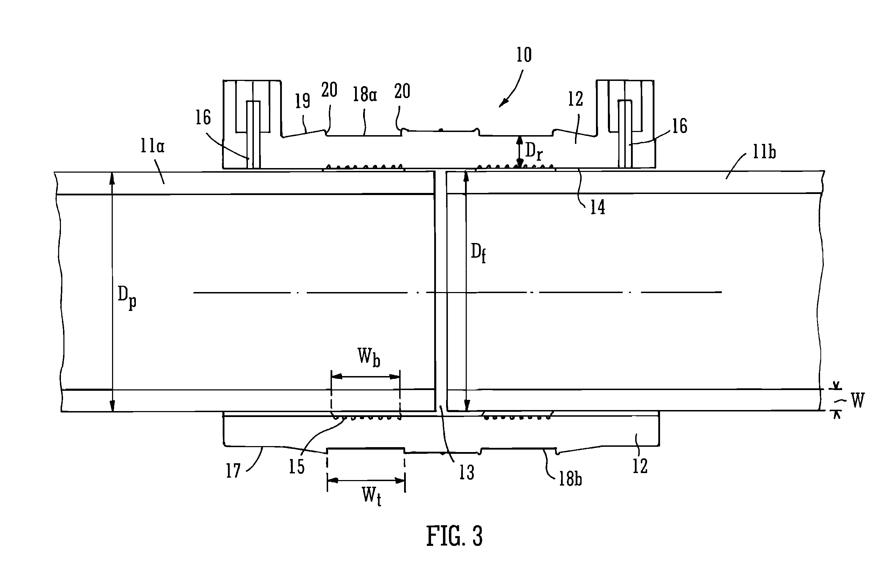

Figure 3 shows an electrofusion fitting according to one embodiment of the present invention. The embodiment shown is an electrofusion socket fitting 10 to be used to connect two plastic pipes 11a, 11b. The plastic pipes have a diameter Dₚ and walls of thickness W. The fitting 10 has a plastic body 12 with an internal bore 13. The bore has an internal fusion surface 14 which defines an internal diameter D_{f} of the fitting. An electrofusion element 15 comprising resistance wire is positioned at or close to the fusion surface. The EF element comprises a helical coil that has a width W_{b}. The EF element is connected to terminal pins 16 such that a current can be passed through the EF element. In use, the two pipes 11 are positioned inside the bore 13 of the fitting 10. The diameter D_{f} is greater than the diameter Dₚ so that the pipes may be inserted and a small gap formed between each of the pipes 11 and the fitting 10. Current is then passed through the EF element that causes the surrounding plastic of the body 12 and the pipe 11 to melt. The molten plastic is then allowed to cool and solidifies to form a fused joint.

The fitting 10 has an exterior surface 17. Two indicator regions 18a, 18b are positioned on the exterior surface 17, each formed as a recess i.e. a variation in the surface profile of the exterior surface in which the indicator regions are lower than the adjacent parts of the exterior surface. The indicator regions 18a, 18b are substantially plain-profiled, that is to say, generally smooth and free of moulded features such as labels or plinths which would otherwise be present in the prior art. The depth of each recess is governed by a minimum depth Dᵣ of body required around the EF element to prevent distortion of the shape of the fitting during fusion as the molten material expands and a second requirement that sufficient material is available to contain the pressure of the pipeline system in service. The indicator regions 18a, 18b are bounded by chamfered sections 19 which define the edges 20 of the indicator regions. This avoids the need for the whole of the remainder of the exterior surface (i.e. all except the indicator regions) to be raised, thus reducing the overall material. Each indicator region has a width Wₜ that is equal to or greater than the width W_{b} of the EF element. The indicator region therefore visibly indicates on the exterior surface of the fitting the position of the EF element 15 below.

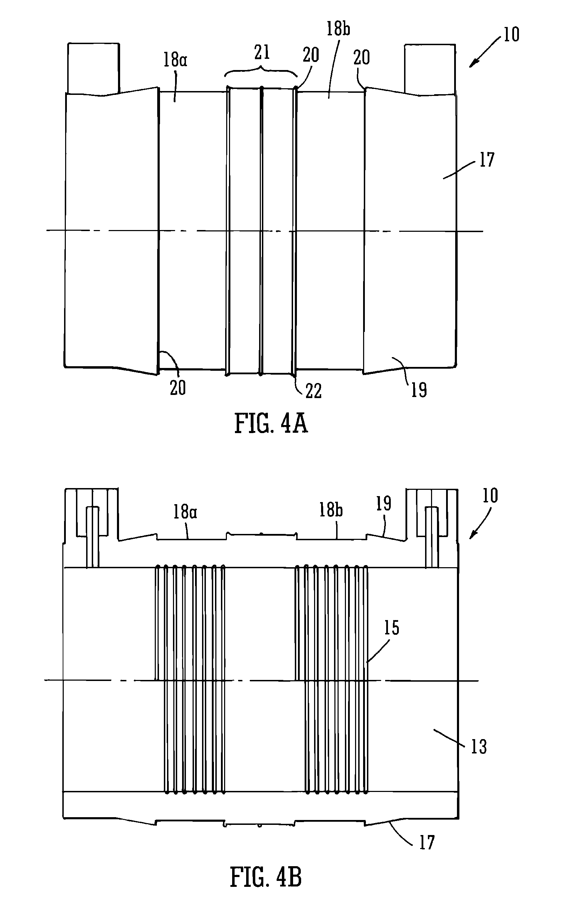

Figure 4 shows the electrofusion fitting 10 of figure 3 without the plastic pipes. Figure 4 shows the exterior surface 17 of the fitting 10 with two indicator regions 18a, 18b. As described above, the indicator regions 18 are bounded by chamfered raised profiles 19 that form edges 20 to the indicator regions. Between indicator regions 18a and 18b, there is a central raised profile 21 of the exterior surface. The central raised profile has ridges 22 at its edges to provide edges bounding the indicator regions whilst reducing the amount of material required to create the raised profile, as discussed above. Figure 4b is a cross sectional view of the fitting 10; the EF element 15 is shown inside the bore 13.

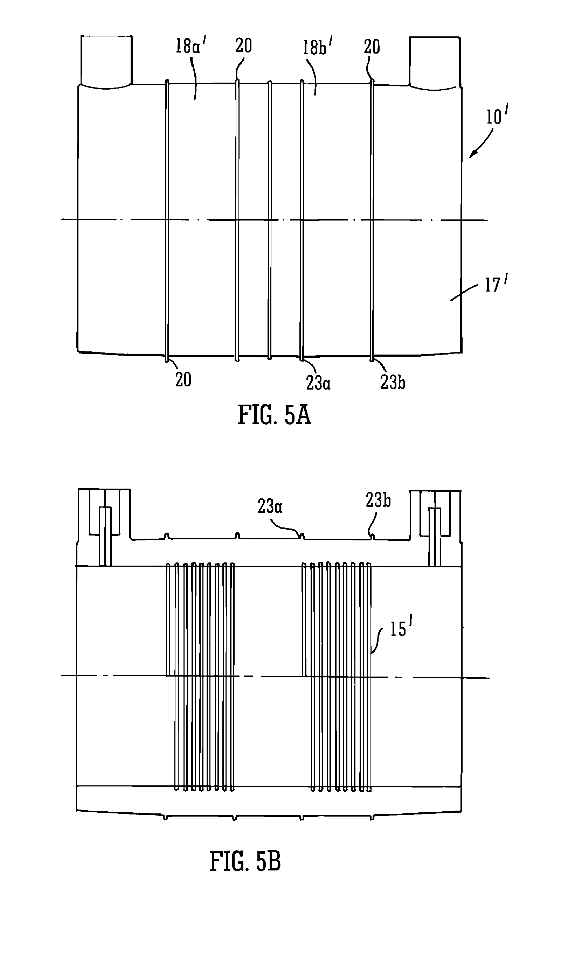

Figure 5 shows another embodiment of a fitting according to the present invention. The embodiment is an electrofusion fitting 10' for connecting plastic pipes (not shown). In this embodiment, the indicator regions 18a', 18b' are bounded by two ridges, or rails, raised as a profile from the exterior surface 17'.

The rails 23a, 23b define the indicator region 18a' by providing edges 20'. Figure 5b shows that the rails are positioned above the ends of EF element 15'. The rails are preferably formed from the same material as the exterior surface. Indeed they can be integrally moulded with the exterior surface. Using rails 23a, 23b to define the indicator region has the advantage that a relatively small amount of material is used compared with raising the profile of the whole of the remainder of the exterior surface 17'.

Figure 6 shows a further alternative embodiment of the fitting. Here an electrofusion fitting 10" has indicator regions 18a", 18b" formed as a raised profile from the exterior surface 17". The indicator region 18a" has a width Wₜ' that is approximately the same width as the width W_{b}' of the EF element 15". The indicator region therefore externally indicates the location of the EF element. Edges 20" of the indicator region are formed by the raised profile. The indicator region 18a" is formed from the same plastic material as the body 12" and is preferably formed integrally with the body, i.e. moulded simultaneously.

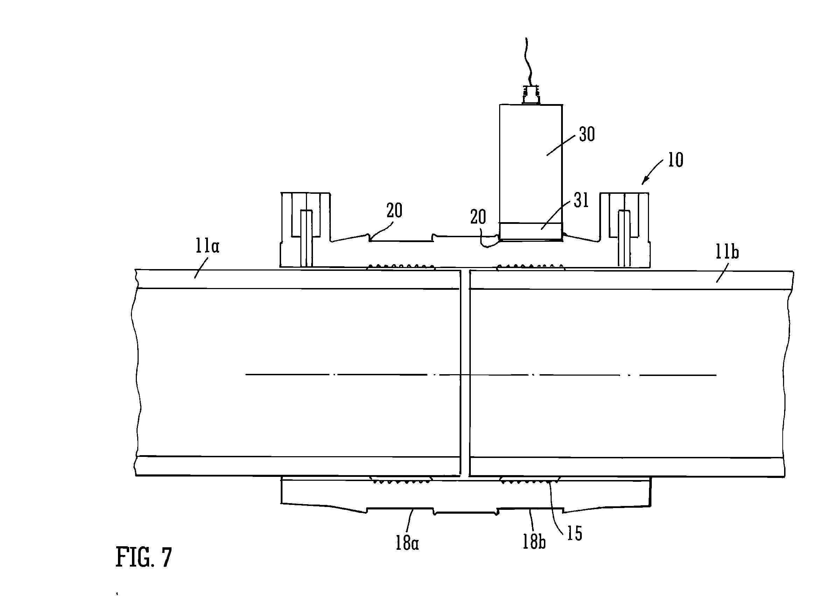

Figure 7 shows the embodiment of figures 3 and 4 in use as a fitting 10 connecting two pipes 11a, 11b. The indicator regions 18a, 18b, indicate the position of the EF element 15. The indicator regions also provide location for a non-destructive examination (NDE) tool 30. The tool comprises an engaging end 31 that engages with the edges 20 of the indicator region thereby localizing the tool. The tool can then be moved along the indicator region (i.e. circumferentially around the fitting) to inspect the underlying fusion zone in the general region of the EF element 15.

The tool can also be used with the fitting of figures 5 and 6. For the indicator region of figure 6, the engaging end 31 is adapted to localize the tool about the edges 20" which are on the outside of the raised indicator regions 18a", 18b".

The substantially plain-profiled indicator region provides an exterior surface on which the NDE tool can be readily placed perpendicularly, free of impediment such as raised labels or other moulded features which would be present in the prior art. Consequently, errors caused by variations in angular positioning can be reduced and it is easier to observe the reflection from the pipe bore generated by the NDE tool and make assessment of any misalignment of the part.

A further benefit of the present invention is that positive guidance can be provided for the NDE probe to move around the fitting, avoiding the introduction of offsets wherein the probe is displaced in the axial direction. This assists in reducing the computing requirements to correct data back to a datum when overlaying multiple examination traces. This is particularly important when seeking to determine the direction and rate of crack growth emanating from defects over a period of time.

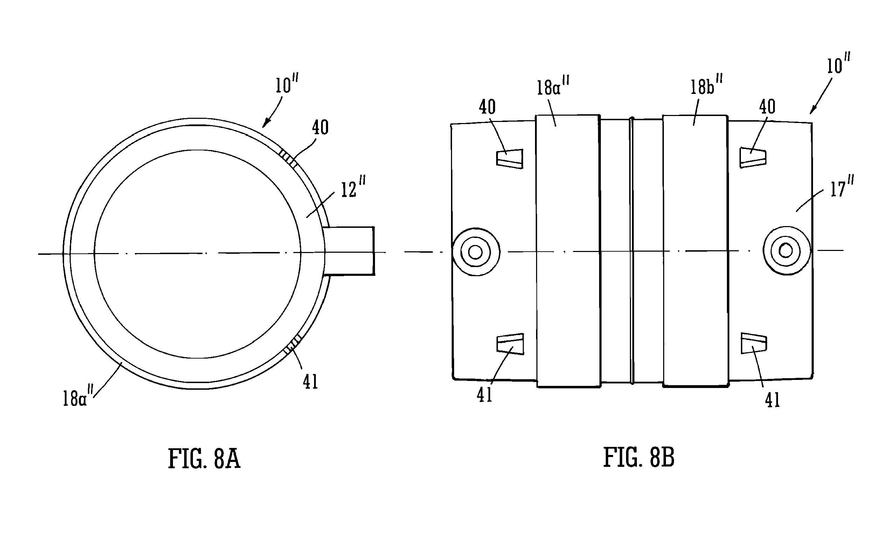

Figure 8 shows a further embodiment of a fitting according to the present invention. As per figure 6, the embodiment of figure 8 comprises indicator regions 18a", 18b" formed as raised profiles from the exterior surface 17" of the body 12" of the fitting 10". Figure 8a shows the indicator region 18a" running circumferentially around the cylindrical body of the fitting 10". The embodiment of figure 8 further comprises fixed reference points or datum locators 40, 41 used to reference an NDE tool (not shown) such as that described above. The locators 40, 41 can be lugs moulded onto the exterior surface 17" of the fitting 10".

The datum locators 40, 41 enable the NDE probe to scan the fitting from the same location each time thus facilitating the overlay of data. A mechanical stop can be fitted to the tool 30 to engage with the locators so that the tool is datum located on the fitting. Figure 8 shows two locators 40 and 41, however there could also be a third feature against which a datum could be triangulated. The use of single or other multiple fixed reference points, raised or recessed to either the exterior surface 17" or the end face 12" is also envisaged.

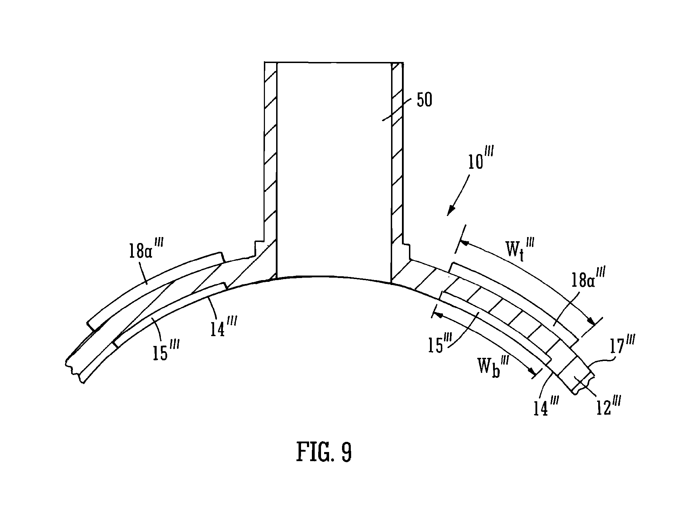

Figure 9 shows a further embodiment of a fitting according to the present invention. The embodiment is a electrofusion saddle fitting 10"' having a plastic body 12"'. The fitting is adapted to fit onto a plastic pipe (not shown) to provide a branch 50 from the plastic pipe. The fitting comprises an EF element 15"' having a width W_{b}"', and an indicator region 18a"' formed as a raised profile from the exterior surface 17"' of the body of the fitting. The EF element is positioned on or close to the interior fusion surface 14"'. Only one indicator region 18a"' is required for this saddle fitting because the EF element 15"' is helically wound around the branch 50. The indicator region has a width Wₜ"' that is approximately equal to the width W_{b}"' of the EF element. As in previously-described embodiments, the indicator region is used to externally visibly indicate the position of the EF element and/or to localize a non-destructive examination tool.

Throughout the embodiments described above, the outer shape of the fitting is generally optimised for manufacturing processes (e.g. injection molding). The surfaces of the fitting therefore have mould draft angles to ease ejection from the mould cavity, and equally may have geometric grooves to facilitate clamping of the part for secondary processes such as wire laying.

The fitting as described in any of the foregoing embodiments of the invention may have features that faciliate the tool 30 moving around the fitting, either by manual or self-propelled means. In this aspect, the engaging end 31 of the tool may include means for measuring the radial displacement of the tool relative to a datum locator 40, 41 to remove scanning errors due to differential rates of rotation. This aspect is provided either by the provision of a feature in the moulding process or by the addition of secondary parts after moulding has been completed. Engagement means in the form of an area of high coefficient of friction or a gear toothed region may be provided on the fitting adjacent to the indicator region. Alternatively, the edges 20 of the indicator region themselves may comprise the engaging means.

In the example of a gear toothed region of the fitting, the engaging end 31 of the tool 30 may comprise a toothed wheel linked to a rotary encoder to ascertain the radial displacement. Equally, a toothed fitting provides engaging means for a driven gear wheel able to rotate the probe at a constant speed around the fitting. The teeth are preferably fine to provide accurate movement and calculations of radial displacement. There may also be a zero tooth datum locator that provides a zero position for the tool. The tool may include driving means to propel the tool across or around the indicator region.

Moulded labels, fixing points and other exterior mouldings on the exterior surface of the fitting need to be relocated to alternate positions outside the indicator region (e.g. end zones of the fitting, a moulded tab, etc.). Existing melt indicators can be retained through the use of a melt well. The performance indication in the case of a melt well is provided by the degree to which the melt expands up the hole in the body of the fitting before solidifying. The melt well may be positioned in the indicator regions 18a, 18b and does not interfere with the use of the NDE tool.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. An electrofusion fitting for a plastics pipeline, comprising:
a moulded plastic body having an exterior surface and an interior fusion surface; and
an electrofusion element occupying an area at or near the fusion surface, said electrofusion element being adapted to form a fused joint between said fitting and
said plastic pipeline,
**characterised in that**:
said exterior surface includes a substantially plain-profiled indicator region located above said EF element area.

2. An electrofusion fitting as claimed in claim 1, in which said indicator region has an area equal to or larger than said EF element area.

3. An electrofusion fitting as claimed in claim 1 or 2, in which said indicator region is bounded on at least one side by a variation in the surface profile of the exterior surface of the fitting.

4. An electrofusion fitting as claimed in claim 3 wherein said variation in the surface profile comprises said indicator region being raised with respect to adjacent parts of said exterior surface.

5. An electrofusion fitting as claimed in claim 3 wherein said variation in the surface profile comprises said indicator region being lower with respect to adjacent parts of said exterior surface.

6. An electrofusion fitting as claimed in claim 3, wherein said variation in the surface profile further comprises a flange upstanding from said exterior surface and adjacent to said indicator region, preferably in which said flange has a substantially rectangular or substantially triangular profile.

7. An electrofusion fitting as claimed in any of claims 3 to 6, in which said indicator region is bounded on both sides by said variation in the surface profile of the exterior surface of the fitting.

8. An electrofusion fitting as claimed in any of the preceding claims wherein said indicator region is capable of guiding a non-destructive examination tool in order to inspect said EF element area, the fitting preferably further comprising one or more fixed reference points for use in inspection of said EF element area, and further preferably
wherein said one or more reference points comprise a lug upstanding from the exterior surface.

9. An electrofusion fitting as claimed in any preceding claim, wherein:
said electrofusion fitting is a generally cylindrical fitting; or wherein
said electrofusion fitting is a saddle fitting.

10. An electrofusion fitting as claimed in any of the preceding claims further comprising engaging means for engaging a non-destructive examination tool, preferably wherein said engaging means is located on said indicator region and/or wherein said engaging means comprises an area of high coefficient of friction and/or a plurality of teeth.

11. A non destructive examination tool for inspecting the EF element area of an electrofusion fitting as claimed in any of claims 1 to 10, said tool having an engaging end for engaging the fitting at said indicator region.

12. A tool as claimed in claim 11 when dependent on claim 8 further comprising referencing means adapted to use said fixed reference points to reference said tool about said fitting.

13. A tool as claimed in claim 11 or 12 further comprising driving means configured to drive said tool across said indicator region and, in the case of a generally cylindrical fitting, configured to drive said tool around the circumference of said fitting.

14. A tool as claimed in any of claims 11 to 13 when dependent on claims 10 wherein said tool is adapted to engage with said engaging means.

15. Non-destructive condition assessment method for an electrofusion joint comprising the steps of:
a. Providing a tool as claimed in any of claims 11-14;
b. engaging said tool with the indicator region of said fitting and locating the tool therewith using a fixed reference point;
c. moving said tool across said indicator region in order to obtain data for condition assessment, said condition assessment being repeatable at a later time by repositioning said tool with respect to said fixed reference point.
